# FASCICULE DE BREVET EUROPEEN

(11) **EP 2 904 324 B1**
(45) Date de publication et mention de la délivrance du brevet: **20.02.2019**
(21) Numéro de dépôt: 13789602.3
(22) Date de dépôt: 17.09.2013
(51) Int. Cl.: F23R 3/04, F23R 3/34

(54) **ENSEMBLE DE COMBUSTION DE TURBOMACHINE A VARIATION D'ALIMENTATION D'AIR**
TURBINENMOTORVERBRENNUNGSANLAGE MIT VARIABLER LUFTZUFUHR
TURBINE ENGINE COMBUSTION ASSEMBLY WITH A VARIABLE AIR SUPPLY

(30) Priorité: 01.10.2012 FR 1259288
(43) Date de publication de la demande: 12.08.2015
(73) Titulaire: Safran Helicopter Engines, 64510 Bordes (FR)
(72) Inventeur: CARRERE, Bernard, F-64000 Pau (FR)
(74) Mandataire: Regimbeau
(86) Numéro de dépôt international: PCT/FR2013/052125
(87) Numéro de publication internationale: WO 2014/053724

(56) Documents cités:
- GB-A- 2 073 400
- JP-A- 2006 010 193
- US-A- 5 177 956
- US-A1- 2010 229 557

## Description

### DOMAINE DE L'INVENTION

L'invention concerne de manière générale le domaine des turbomachines, et plus particulièrement le montage d'un dispositif d'injection de carburant sur un carter de turbomachine et une chambre de combustion.

### ETAT DE LA TECHNIQUE

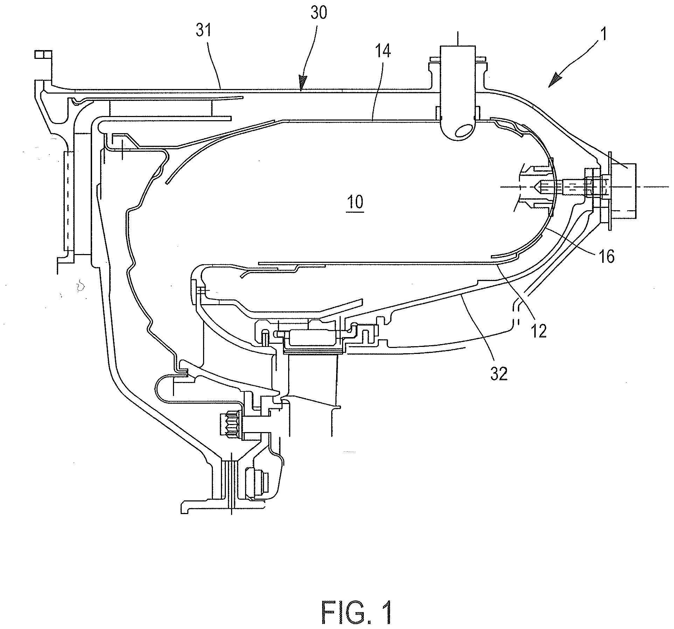

En référence à la figure 1, les turbomachines 1 comportent classiquement une chambre de combustion 10 et un distributeur 20 logés dans un carter 30, la chambre de combustion étant délimitée par des parois de révolution externe 14 et interne 12 s'étendant l'une à l'intérieur de l'autre et étant reliées par une paroi annulaire 16 de fond de chambre.

Le carter présente également une paroi interne 32 et une paroi externe 31 auxquelles sont respectivement fixées les parois internes 12 et externes 14 de la chambre de combustion.

Un mélange d'air et de carburant est injecté dans la chambre de combustion par une pluralité d'injecteurs 18 montés sur la paroi de fond de chambre, et répartis sur toute la circonférence de celle-ci.

Plusieurs types d'injecteurs sont disposés dans une chambre de combustion, parmi lesquels les injecteurs de démarrage, qui comprennent un gicleur injectant le mélange d'air et de carburant, et une bougie enflammant ce mélange.

Pour caractériser les injecteurs on utilise une grandeur appelée Flow Number (FN) égale au débit en L/h de l'injecteur divisé par la pression en bars du mélange injecté. Les injecteurs de démarrage présentent un Flow Number typiquement compris entre 1.2 et 1.5.

Les autres injecteurs sont dédiés aux régimes post-démarrage : régimes transitoires d'accélération ou décélération et régimes stationnaires en vol. Ces injecteurs présentent un Flow Number bien plus important, compris entre 9 et 10, c'est-à-dire que leur débit d'injection de carburant est plus élevé.

Or, quels que soient les injecteurs existants, leur besoin en air pour assurer la combustion du carburant varie en fonction du régime de la turbomachine. Notamment, au démarrage de la turbomachine, les injecteurs nécessitent de prélever une quantité d'air importante pour allumer le carburant.

A l'inverse, lors des phases post-démarrage, typiquement en régime stationnaire de vol, le besoin en air est diminué, et il n'est pas utile de prélever une quantité d'air aussi importante que pour le démarrage. Au contraire, il est plus avantageux de prélever une quantité d'air moins importante pour que le flux d'air non prélevé par les injecteurs puisse servir à d'autres utilisations, telles que notamment le refroidissement de la machine.

JP 2006-10193 A montre un ensemble de combustion de turbomachine avec les caractéristiques d'un ensemble de combustion de turbomachine selon le préambule de la revendication 1.

### PRESENTATION GENERALE DE L'INVENTION

L'invention a pour but de proposer un ensemble de combustion de turbomachine comprenant une chambre de combustion alimentée par des injecteurs de carburant, dont l'alimentation en air est variable en fonction du régime du moteur.

A cet égard, l'invention a pour objet un ensemble de combustion de turbomachine, comprenant un carter, une chambre de combustion, et au moins un injecteur de carburant pour le démarrage d'une turbomachine,
la chambre de combustion étant délimitée par deux parois de révolution internes et externes s'étendant l'une à l'intérieur de l'autre et étant reliées par une paroi annulaire de fond de chambre, la paroi externe de la chambre étant fixée sur une paroi annulaire externe du carter,
l'injecteur étant rapporté sur la paroi annulaire externe du carter, et comprenant une enceinte d'allumage du carburant s'étendant dans le carter successivement au travers d'une ouverture agencée dans la paroi du carter et d'une ouverture agencée dans la paroi externe de la chambre de combustion, pour déboucher à l'intérieur de celle-ci, au moins une paroi de l'enceinte d'allumage s'étendant entre la paroi du carter et la paroi de la chambre de combustion étant pourvue d'au moins un orifice d'admission d'air,
l'ensemble de combustion étant caractérisé et en ce que la paroi externe de la chambre de combustion est solidaire d'un dispositif d'obturation du ou desdits orifices d'admission d'air en fonction d'un état de dilatation thermique de la chambre de combustion.

Avantageusement, mais facultativement, la turbomachine selon l'invention peut en outre comprendre au moins l'une des caractéristiques suivantes :
- le dispositif d'obturation est disposé contre la paroi de l'enceinte d'allumage et en relation de glissement avec celle-ci.
- le dispositif d'obturation est conformé pour obturer au moins certains orifices d'admission d'air à un état de dilatation thermique dit « à chaud » de la chambre de combustion, correspondant à un régime post-démarrage de la turbomachine.
- le dispositif d'obturation est conformé pour obturer au moins certains orifices d'admission d'air à un état de dilatation thermique dit « à froid » de la chambre de combustion, correspondant à un régime à l'arrêt de la turbomachine.
- le dispositif d'obturation du ou des orifices d'admission d'air est un fourreau entourant la paroi de l'enceinte d'allumage.
- la paroi de l'enceinte d'allumage est pourvue d'un orifice d'admission d'air triangulaire, et le fourreau est pourvu d'une fenêtre rectangulaire de largeur supérieure ou égale à la base du triangle et de hauteur supérieure ou égale à celle du triangle.
- la paroi de l'enceinte d'allumage est pourvue d'une pluralité d'orifices d'admission d'air, les orifices étant circulaires ou oblongs, le fourreau étant pourvu de fentes régulièrement espacées, l'interstice entre deux fentes adjacentes présentant une largeur supérieure ou égale au diamètre ou à la hauteur des orifices d'admission d'air.
- la largeur d'une fente du fourreau est supérieure ou égal au diamètre ou à la hauteur des orifices d'admission d'air.
- les orifices d'admission d'air sont des orifices circulaires répartis selon une pluralité de lignes parallèles sur la paroi de l'enceinte d'allumage ou sont des lumières oblongues parallèles, et les fentes et les interstices entre deux fentes adjacentes du fourreau s'étendent selon une direction parallèle à la direction des lignes formées par les orifices ou des lumières oblongues.
- les orifices d'admission d'air sont des orifices circulaires répartis selon une pluralité de lignes parallèles sur la paroi de l'enceinte d'allumage ou sont des lumières oblongues parallèles, et dans laquelle les fentes et les interstices entre deux fentes adjacentes du fourreau s'étendent selon une direction inclinée par rapport à la direction des lignes formées par les orifices ou des lumières oblongues, d'un angle compris strictement entre 0 et 90°
- la chambre de combustion est du type inversée.
- chaque injecteur de carburant est en outre adapté pour alimenter la chambre de combustion lors d'un régime post-démarrage de la turbomachine.

L'invention a également pour objet une turbomachine comprenant un ensemble de combustion selon l'invention.

La présente l'invention atteint le but précité grâce au dispositif d'obturation des orifices d'admission d'air d'un injecteur, qui se déplace pour obturer ou libérer lesdits orifices en fonction de l'état de dilatation thermique de la chambre de combustion, correspondant à un état de fonctionnement de la turbomachine.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, représente une vue en coupe d'une turbomachine au niveau de la chambre de combustion.
- La figure 2 représente un injecteur du type utilisé dans un ensemble de combustion selon l'invention.
- Les figures 3a et 3b représentent un ensemble de combustion selon un mode de réalisation de l'invention, dans deux états de fonctionnement d'une turbomachine.
- Les figures 4a et 4b représentent l'ensemble de combustion des figures 3a et 3b, en vue en coupe transversale, dans deux états de fonctionnement d'une turbomachine.
- La figure 5 représente un ensemble de combustion selon un autre mode de réalisation de l'invention.
- Les figures 6a et 6b représentent schématiquement un autre mode de réalisation d'un ensemble de combustion, dans deux états de fonctionnement d'une turbomachine.
- La figure 6c représente la section non obturée de l'orifice d'échappement des figures 6a et 6b en fonction de l'état de dilatation de la turbomachine,
- Les figures 7a et 7b représentent schématiquement une variante du mode de réalisation des figures 6a et 6b, dans deux états de fonctionnement d'une turbomachine.
- La figure 7c représente la section non obturée de l'orifice d'échappement des figures 7a et 7b en fonction de l'état de dilatation de la turbomachine,

### DESCRIPTION DETAILLEE D'AU MOINS UN MODE DE REALISATION DE L'INVENTION

Conformément à la figure 1 déjà décrite, une turbomachine 1 comporte une chambre de combustion 10 logée dans un carter 30, la chambre de combustion étant délimitée par des parois de révolution externe 14 et interne 12 s'étendant l'une à l'intérieur de l'autre et étant reliées par une paroi annulaire 16 de fond de chambre.

Le carter 30 présente une paroi annulaire interne 32 et une paroi annulaire externe 31 auxquelles sont respectivement fixées les parois internes 12 et externes 14 de la chambre de combustion.

La chambre de combustion 10 est avantageusement du type inversée, c'est-à-dire du type dans lequel la chambre présente généralement une section en forme de U pour évacuer l'air et les produits de combustion vers l'amont de la turbomachine par rapport à l'axe de celle-ci, en direction d'une turbine.

La chambre de combustion 10 comporte de préférence une pluralité d'injecteurs 100 de démarrage, se trouvant comme décrit ci-après au niveau de la paroi annulaire externe 14 de la chambre de combustion.

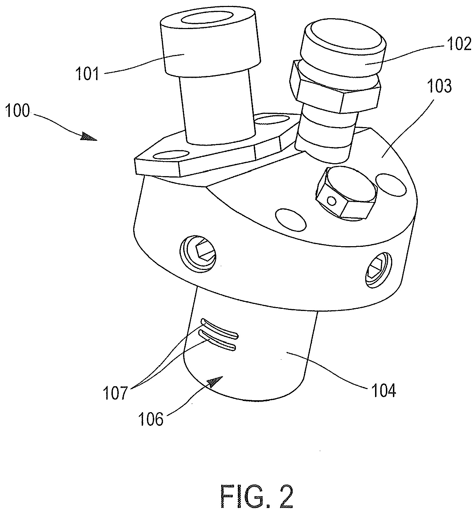

En référence à la figure 2, on a représenté un tel injecteur 100 de démarrage d'une chambre de combustion. Cet injecteur comprend une bougie 101 d'allumage de carburant, et une entrée 102 d'alimentation de carburant.

La bougie 101 et l'entrée d'alimentation de carburant 102 pénètrent dans un capot 103 de l'injecteur, destiné à être fixé sur la paroi externe 31 du carter d'une turbomachine.

Une enceinte 104, dans laquelle a lieu l'allumage du carburant avant que celui-ci ne pénètre dans la chambre de combustion, s'étend en saillie du capot 103.

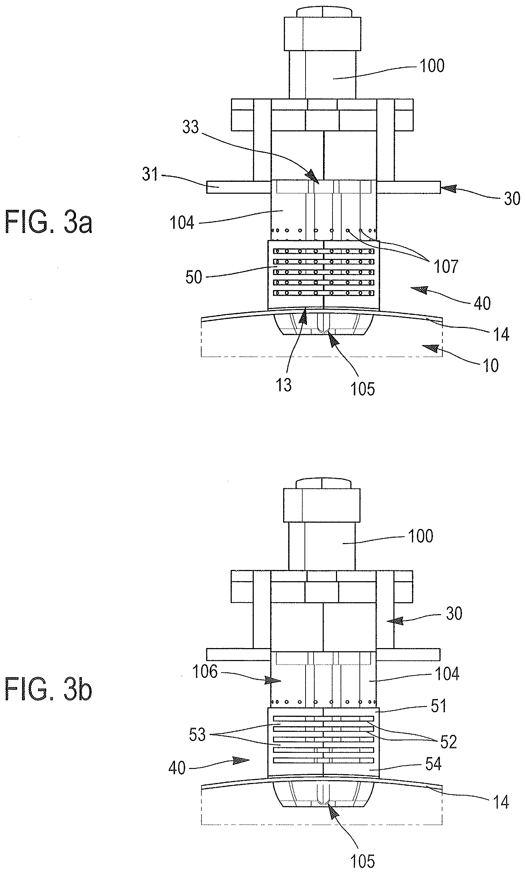

Comme visible sur les figures 3a et 3b, l'enceinte pénètre à l'intérieur du carter 30 via un orifice 33 pratiqué dans la paroi externe 31 de celui-ci. L'enceinte 104 s'étend dans un interstice 40 compris entre le carter 30 et la chambre de combustion 10, dans lequel peut s'écouler un flux d'air lors du fonctionnement de la turbomachine.

L'enceinte pénètre également dans la chambre de combustion 10 par une ouverture 13 pratiquée dans la paroi externe 14 de la chambre.

L'injecteur 100 peut être réalisé de différentes façons ne faisant pas l'objet de la présente invention, mais il comprend de préférence au moins un compartiment comprenant un injecteur de carburant, et dans lequel pénètre une extrémité de la bougie, pour enflammer le carburant. Une ouverture 105 est réalisée à la base de l'enceinte située à l'intérieur de la chambre de combustion (visible sur les figures 3a et 3b), pour permettre l'évacuation du carburant enflammé à l'intérieur de la chambre de combustion.

L'injecteur 100 peut selon un mode de réalisation particulier comprendre, dans l'enceinte 104, un circuit d'allumage du carburant comme précédemment, et un second circuit, adapté pour enflammer un débit plus important de carburant, et pour alimenter la chambre de combustion de la turbomachine y compris pendant les phases post-démarrage de la chambre.

L'enceinte 104 comprend, outre l'ouverture d'échappement 105, sur la portion de sa paroi 106 comprise dans l'interstice 40, au moins un orifice 107 d'admission d'air.

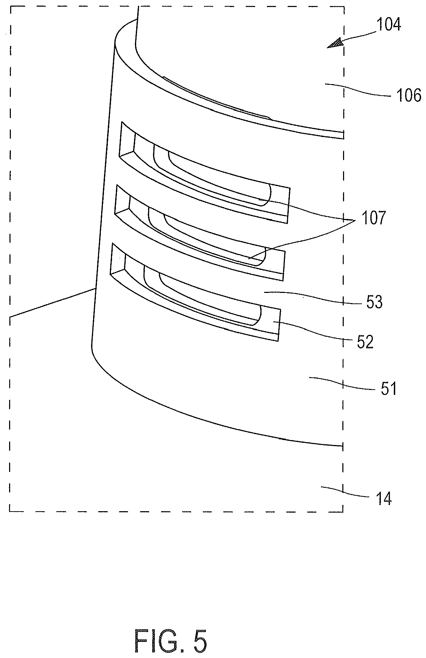

Les orifices peuvent prendre la forme de lumières oblongues, comme sur la figure 2 ou la figure 5, ou de lumières circulaires régulièrement réparties et alignées le long de ladite paroi, comme visible sur les figures 3a et 3b.

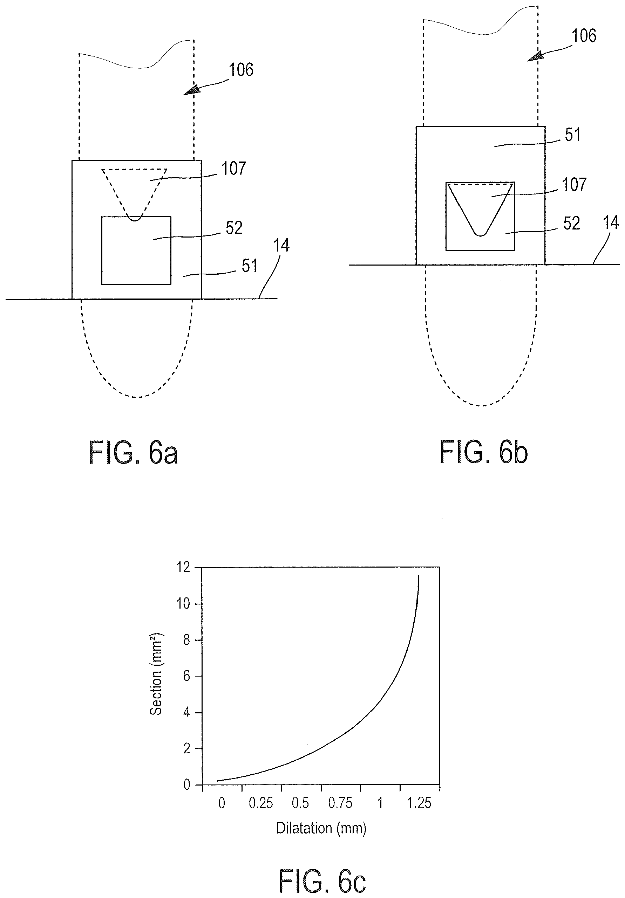

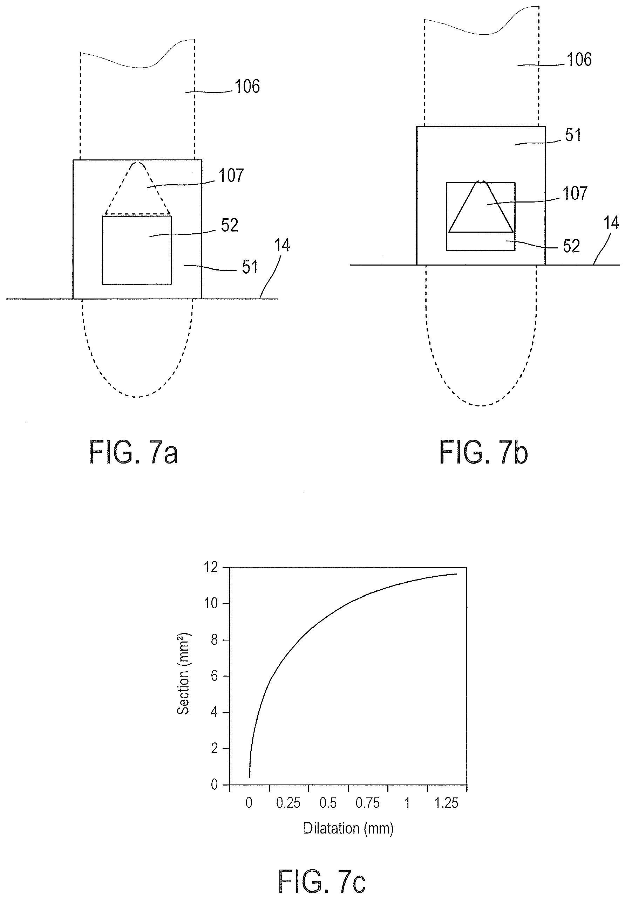

Alternativement, la paroi 106 peut porter un unique orifice 107 d'admission d'air, comme illustré sur les figures 6a, 6b et 7a, 7b, cet orifice présentant une largeur d'ouverture variable avec sa distance par rapport à la paroi externe 14 de la chambre de combustion, par exemple croissante ou décroissante.

Par largeur, on entend une dimension mesurée transversalement à l'axe selon lequel s'étend l'enceinte 104. Dans la suite, on entend par hauteur une dimension mesurée le long dudit axe.

A titre d'exemple non limitatif, cet orifice peut prendre une forme de triangle dont un sommet est orienté vers la paroi externe 14 de la chambre de combustion, comme en figures 6a et 6b, ou dont le sommet est orienté à l'opposé de ladite paroi, comme en figures 7a et 7b.

De retour aux figures 3a et 3b, un dispositif d'obturation 50 du ou des orifices 107 est solidaire de la paroi externe 14 de la chambre de combustion, et en liaison de glissement par rapport à l'enceinte 104.

Il est de préférence mais de façon non limitative rapporté sur la paroi externe 14 de la chambre de combustion, sur le pourtour de l'ouverture 13 agencée dans celle-ci pour faire recevoir la base de l'enceinte 104. Alternativement, le dispositif d'obturation peut être venu de matière avec la paroi 14 de la chambre de combustion.

Le dispositif d'obturation 50 est de préférence un fourreau 51 faisant saillie depuis la paroi 14 de la chambre de combustion vers la paroi externe 31 du carter, et entourant l'enceinte 104 en étant en contact avec celle-ci sur une portion de sa paroi 106 comprise dans l'interstice 40.

Le fourreau comprend en outre au moins une fente, de préférence une pluralité de fentes 52 permettant de libérer ou d'obturer tout ou partie des orifices 107 de la paroi 104.

Le fourreau peut être réalisé de différences manières.

Sur les figures 3a et 3b, les orifices 107 de la paroi sont des ouvertures circulaires alignées selon une pluralité de lignes parallèles le long de la paroi de l'enceinte. Les fentes 52 du fourreau peuvent être conformées pour obturer ou libérer complètement les orifices 107 en fonction des positions relatives des orifices 107 et des fentes 52.

Par exemple, les fentes 52 du fourreau peuvent présenter une orientation parallèle à l'alignement des orifices 107, et présenter une largeur supérieure ou égale au diamètre des orifices 107. Ainsi, comme sur la figure 3a, si les fentes sont en regard des orifices, tous les orifices 107 d'un même alignement ouverts et débouchent sur l'interstice 40.

Les interstices 53 entre deux fentes successives 52 du fourreau peuvent également présenter une largeur supérieure ou égale au diamètre des orifices de manière à obturer complétement les orifices 107 d'un même alignement lorsque les fentes 52 ne sont pas en regard desdits orifices.

C'est le cas représenté en figure 3b.

De manière analogue, sur la figure 5, les orifices 107 de l'enceinte 104 peuvent être des lumières oblongues, et dans ce cas les fentes 52 du fourreau 51 peuvent présenter au moins la même longueur, ainsi que la même largeur, le même espacement et la même orientation que les lumières 107. Ceci permet comme précédemment d'obturer ou de libérer en même temps toutes les fentes.

Que les orifices 107 d'admission d'air de l'enceinte 104 soient des lumières circulaires ou oblongues, les fentes 52 du fourreau peuvent aussi être inclinées par rapport à l'alignement des orifices ou l'orientation des lumières, de manière à n'obturer qu'une partie desdits orifices même quand les fentes se trouvent en regard des orifices.

Ceci permet, pour un faible déplacement du fourreau 51, de conserver un débit d'air plus important que si les fentes n'étaient pas inclinées.

Par exemple, les fentes peuvent être inclinées de 0 à 90° par rapport à l'orientation de l'alignement des orifices.

Un autre mode de réalisation est représenté schématiquement en figures 6a et 6b ; l'enceinte 104 comprend alors un orifice 107 d'admission d'air triangulaire, dont un sommet est orienté vers la paroi externe 14 de la chambre de combustion.

La fente 52 réalisée dans le fourreau est alors une fenêtre rectangulaire, de largeur supérieure ou égale à la base du triangle 107, et de hauteur supérieure ou égale à celle du triangle. La hauteur du triangle correspond avantageusement à la translation maximale du fourreau, par exemple 1,25 mm.

Dans les figures 7a et 7b, le triangle 107 d'admission d'air présente un sommet opposé à la paroi externe 14 de la chambre de combustion, et comme précédemment, la fenêtre 52 du fourreau est également rectangulaire, de hauteur supérieure ou égale à celle du triangle, et de largeur supérieure ou égale à la base du triangle.

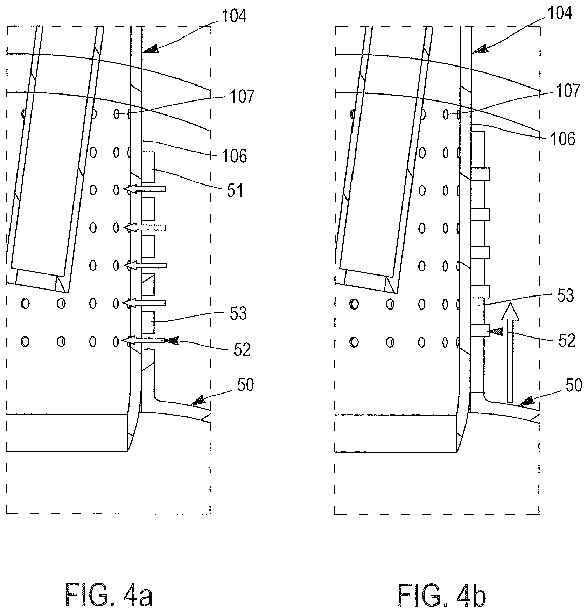

La relation de glissement du fourreau 51 par rapport à l'enceinte 104 est expliquée ci-après en référence aux les figures 4a et 4b. Comme indiqué ci-avant, le fourreau 51 est solidaire de la paroi externe 14 de la chambre de combustion.

Cette paroi n'est pas fixée à l'enceinte 104, l'injecteur étant fixé uniquement sur le carter, de sorte qu'elle peut également se déplacer relativement à l'enceinte 104.

Or, cette paroi est soumise à une dilatation thermique variable en fonction des régimes de fonctionnement de la chambre de combustion. Lorsque la turbomachine est à l'arrêt, la chambre de combustion se trouve dans un état de dilatation thermique dit « à froid », état représenté en figure 4a.

Le démarrage de la turbomachine, puis son fonctionnement en régime post-démarrage (décollage, régime stationnaire, atterrissage) provoque un échauffement de la chambre de combustion, tel que la chambre se dilate et la paroi 14 se translate vers le carter.

Cet état de dilatation thermique atteint un état extrême dit « à chaud » lors du régime post-démarrage de la turbomachine, cet état étant représenté en figure 4b. A cet état, la paroi 14 peut s'être translatée d'une distance totale de l'ordre de 1,25 mm vers le carter.

Le dispositif d'obturation 50 étant solidaire de ladite paroi, il se déplace également en liaison de glissement par rapport à l'enceinte, selon le mouvement de la paroi 14.

Ainsi, en fonction de l'état de dilatation thermique de la chambre de combustion, et des géométries respectives des orifices 107 et des fentes 52, le déplacement relatif du dispositif d'obturation par rapport à la paroi 14 entraîne l'obturation ou la libération de tout ou partie des orifices.

Bien entendu, les orifices d'admission d'air 107 et des fentes 52 sont dimensionnés en fonction du déplacement du fourreau généré par la dilatation thermique de la chambre de combustion. Par exemple, pour un déplacement de 1,25 mm entre l'état « à froid » et l'état « à chaud », on peut prévoir que les orifices d'admission d'air présentent une hauteur - dans le cas de lumières oblongues ou d'un triangle - ou un diamètre - dans le cas d'orifices circulaires - inférieur à 1,25 mm, avantageusement de l'ordre de 1,25 mm et que les fentes 52 et le cas échéant les interstices 53 entre celles-ci présentent une largeur inférieure à 1, 25 mm, avantageusement de l'ordre de 1,25 mm.

Le dispositif d'obturation de l'air 50, mobile en fonction de l'état de dilatation thermique de la chambre de combustion, permet d'ajuster la quantité d'air utilisée pour l'allumage du carburant en fonction d'un état de fonctionnement de la chambre.

En effet, on a généralement besoin, au démarrage de la turbomachine, d'une grande quantité d'air, pour bruler une quantité de carburant suffisante pour allumer la chambre de combustion.

Lorsque la turbomachine est en régime post-démarrage, ce besoin en air est diminué. De plus il est avantageux de préserver cet air pour une autre utilisation, telle que par exemple pour le refroidissement de la turbomachine.

Ainsi, il est particulièrement avantageux de conformer le dispositif d'obturation d'air 50, pour que « à froid » (sans dilatation thermique), les orifices 107 soient dans un état d'obturation minimal, par exemple pour qu'aucun orifice ne soit obturé.

Dans ce cas, la dilatation thermique de la chambre 10 et le changement de position du fourreau 51 entraînent une réduction de l'admission d'air par une obturation de tout ou partie des orifices 107 lorsque la turbomachine fonctionne.

Ce résultat peut être obtenu par exemple en ajustant la largeur de l'interstice 54 entre la paroi de la chambre de combustion 14 et la première fente 52.

Alternativement, on peut envisager pour d'autres raisons de conformer le dispositif d'alimentation d'air 50 pour que l'état d'obturation minimal des orifices 107 corresponde à un état de dilatation « à chaud » de la turbomachine.

C'est le cas représente sur les figures 6a à 6c, et sur les figures 7a à 7c.

De plus, la variation d'alimentation d'air voulue entre l'état à froid et l'état à chaud dépend de la géométrie employée pour les orifices 107 d'admission d'air et la ou les fentes 52 du fourreau.

Par exemple, en référence à la figure 6c, à l'état froid, l'orifice 107 est quasiment complètement obturé, et la section d'ouverture de l'orifice est donc quasiment nulle. L'orifice présentant une géométrie en triangle orienté vers la paroi 14 de la chambre de combustion, la section d'ouverture augmente proportionnellement au carré du déplacement du fourreau, c'est-à-dire d'abord très progressivement, puis de plus en plus rapidement.

Sur la figure 7c, à l'inverse, l'orifice 107 présente la forme d'un triangle orienté à l'opposé de la paroi 14 de la chambre de combustion. La section d'ouverture de l'orifice est une fonction polynômiale du déplacement du fourreau, et augmente d'abord rapidement, puis de manière plus douce (un même déplacement du fourreau entraîne une moindre augmentation de la section).

La géométrie du ou des orifices 107 ainsi que de la ou les fentes du fourreau peut donc être adaptée en fonction des besoins d'alimentation en air de l'injecteur.

Enfin, on peut combiner les modes de réalisation décrits ci-avant, pour avoir par exemple à la fois des orifices circulaires, des orifices en forme de lumières oblongues et/ou un orifice triangulaire, la géométrie du fourreau étant adaptée à ces orifices.

On a donc proposé un ensemble de combustion comprenant une carter de turbomachine dans laquelle est logée une chambre de combustion, et au moins un injecteur pour le démarrage de la turbomachine, dont l'alimentation en air est variable en fonction de l'état de fonctionnement de la turbomachine.

## Revendications

1. Ensemble de combustion de turbomachine, comprenant un carter (30), une chambre de combustion (10), et au moins un injecteur de carburant (100) pour le démarrage d'une turbomachine (1),
la chambre de combustion (10) étant délimitée par deux parois de révolution internes (12) et externes (14) s'étendant l'une à l'intérieur de l'autre et étant reliées par une paroi annulaire de fond de chambre (16), la paroi externe (14) de la chambre étant fixée sur une paroi annulaire externe (31) du carter,
l'injecteur étant rapporté sur la paroi annulaire externe du carter (31), et comprenant une enceinte (104) d'allumage du carburant s'étendant dans le carter (30) successivement au travers d'une ouverture (33) agencée dans la paroi (33) du carter et d'une ouverture (13) agencée dans la paroi externe (14) de la chambre de combustion, pour déboucher à l'intérieur de celle-ci, au moins une paroi (106) de l'enceinte d'allumage (104) s'étendant entre la paroi (31) du carter et la paroi (14) de la chambre de combustion étant pourvue d'au moins un orifice (107) d'admission d'air,
l'ensemble de combustion étant **caractérisé en ce que** la paroi externe (14) de la chambre de combustion est solidaire d'un dispositif d'obturation (50) du ou desdits orifices d'admission d'air (107) en fonction d'un état de dilatation thermique de la chambre de combustion (10).

2. Ensemble de combustion selon la revendication 1, dans lequel le dispositif d'obturation (50) est disposé contre la paroi (106) de l'enceinte d'allumage et en relation de glissement avec celle-ci.

3. Ensemble de combustion selon l'une des revendications 1 ou 2, dans lequel le dispositif d'obturation (50) est conformé pour obturer au moins certains orifices (107) d'admission d'air à un état de dilatation thermique dit « à chaud » de la chambre de combustion (10), correspondant à un régime post-démarrage de la turbomachine (1).

4. Ensemble de combustion selon l'une des revendications 1 ou 2, dans lequel le dispositif d'obturation (50) est conformé pour obturer au moins certains orifices d'admission d'air (107) à un état de dilatation thermique dit « à froid » de la chambre de combustion (10), correspondant à un régime à l'arrêt de la turbomachine (1).

5. Ensemble de combustion selon l'une des revendications précédentes, dans lequel le dispositif d'obturation (50) du ou des orifices d'admission d'air (107) est un fourreau (51) entourant la paroi (106) de l'enceinte (104) d'allumage.

6. Ensemble de combustion selon la revendication 5, dans lequel la paroi (106) de l'enceinte d'allumage (104) est pourvue d'un orifice d'admission d'air (107) triangulaire, et le fourreau est pourvu d'une fenêtre (52) rectangulaire de largeur supérieure ou égale à la base du triangle et de hauteur supérieure ou égale à celle du triangle.

7. Ensemble de combustion selon la revendication 5, dans lequel la paroi (106) de l'enceinte d'allumage (104) est pourvue d'une pluralité d'orifices d'admission d'air (107), les orifices étant circulaires ou oblongs, le fourreau (51) étant pourvu de fentes (52) régulièrement espacées, l'interstice (53) entre deux fentes adjacentes (52) présentant une largeur supérieure ou égale au diamètre ou à la hauteur des orifices d'admission d'air (107).

8. Ensemble de combustion selon la revendication précédente, dans lequel la largeur d'une fente (53) du fourreau est supérieure ou égal au diamètre ou à la hauteur des orifices d'admission d'air (107).

9. Ensemble de combustion selon l'une des revendications 7 ou 8, dans lequel les orifices d'admission d'air (107) sont des orifices circulaires répartis selon une pluralité de lignes parallèles sur la paroi (106) de l'enceinte d'allumage (104) ou sont des lumières oblongues parallèles, et les fentes (52) et les interstices (53) entre deux fentes adjacentes du fourreau (51) s'étendent selon une direction parallèle à la direction des lignes formées par les orifices (107) ou des lumières oblongues.

10. Ensemble de combustion selon l'une des revendication 7 ou 8, dans lequel les orifices d'admission d'air (107) sont des orifices circulaires répartis selon une pluralité de lignes parallèles sur la paroi (106) de l'enceinte d'allumage (104) ou sont des lumières oblongues parallèles, et dans laquelle les fentes et les interstices (53) entre deux fentes adjacentes (52) du fourreau (51) s'étendent selon une direction inclinée par rapport à la direction des lignes formées par les orifices (107) ou des lumières oblongues, d'un angle compris strictement entre 0 et 90°.

11. Ensemble de combustion selon l'une des revendications précédentes, dans lequel la chambre de combustion (10) est du type inversée.

12. Ensemble de combustion selon l'une des revendications précédentes, dans lequel chaque injecteur (100) de carburant est en outre adapté pour alimenter la chambre de combustion lors d'un régime post-démarrage de la turbomachine.

13. Turbomachine comprenant un ensemble de combustion selon l'une des revendications précédentes.

## Patentansprüche

1. Verbrennungseinheit einer Turbomaschine, umfassend ein Gehäuse (30), eine Brennkammer (10) und mindestens einen Kraftstoffinjektor (100) zum Starten einer Turbomaschine (1),
wobei die Brennkammer (10) von zwei internen (12) und externen (14) Rotationswänden begrenzt ist, die sich die eine im Inneren der anderen erstrecken und durch eine ringförmige Kammerbodenwand (16) verbunden sind, wobei die externe Wand (14) der Kammer an einer externen ringförmigen Wand (31) des Gehäuses befestigt ist,
wobei der Injektor an der externen ringförmigen Wand des Gehäuses (31) angebracht ist und einen Zündbereich (104) des Kraftstoffs umfasst, der sich in dem Gehäuse (30) sukzessive durch eine Öffnung (33) erstreckt, die in der Wand (33) des Gehäuses ausgebildet ist, und eine Öffnung (13), die in der externen Wand (14) der Brennkammer ausgebildet ist, um im Inneren derselben auszumünden, wobei mindestens eine Wand (106) des Zündbereichs (104), die sich zwischen der Wand (31) des Gehäuses und der Wand (14) der Brennkammer erstreckt, mit mindestens einer Lufteinlassöffnung (107) versehen ist,
wobei die Verbrennungseinheit **dadurch gekennzeichnet ist, dass** die externe Wand (14) der Brennkammer mit einer Verschlussvorrichtung (50) der Lufteinlassöffnung(en) (107) in Abhängigkeit von einem thermischen Ausdehnungszustand der Brennkammer (10) fest verbunden ist.

2. Verbrennungseinheit nach Anspruch 1, wobei die Verschlussvorrichtung (50) an der Wand (106) des Zündbereichs und in Gleitbeziehung mit dieser angeordnet ist.

3. Verbrennungseinheit nach einem der Ansprüche 1 oder 2, wobei die Verschlussvorrichtung (50) gestaltet ist, um mindestens einige Lufteinlassöffnungen (107) in einem als "warm" bezeichneten thermischen Ausdehnungszustand der Brennkammer (10), der einem Nachstartbetrieb der Turbomaschine (1) entspricht, zu verschließen.

4. Verbrennungseinheit nach einem der Ansprüche 1 oder 2, wobei die Verschlussvorrichtung (50) gestaltet ist, um mindestens einige Lufteinlassöffnungen (107) in einem als "kalt" bezeichneten thermischen Ausdehnungszustand der Brennkammer (10), der einem Stoppbetrieb der Turbomaschine (1) entspricht, zu verschließen.

5. Verbrennungseinheit nach einem der vorangehenden Ansprüche, wobei die Verschlussvorrichtung (50) der Lufteinlassöffnung(en) (107) eine Hülle (51) ist, welche die Wand (106) des Zündbereichs (104) umgibt.

6. Verbrennungseinheit nach Anspruch 5, wobei die Wand (106) des Zündbereichs (104) mit einer dreieckigen Lufteinlassöffnung (107) versehen ist, und die Hülle mit einem rechteckigen Fenster (52) größerer oder gleicher Breite wie die Basis des Dreiecks und größerer oder gleicher Höhe wie die des Dreiecks versehen ist.

7. Verbrennungseinheit nach Anspruch 5, wobei die Wand (106) des Zündbereichs (104) mit einer Vielzahl von Lufteinlassöffnungen (107) versehen ist, wobei die Öffnungen rund oder länglich sind, wobei die Hülle (51) mit regelmäßig beabstandeten Schlitzen (52) versehen ist, wobei der Spalt (53) zwischen zwei benachbarten Schlitzen (52) eine Breite aufweist, die größer oder gleich dem Durchmesser oder der Höhe der Lufteinlassöffnungen (107) ist.

8. Verbrennungseinheit nach vorangehendem Anspruch, wobei die Breite eines Schlitzes (53) der Hülle größer oder gleich dem Durchmesser oder der Höhe der Lufteinlassöffnungen (107) ist.

9. Verbrennungseinheit nach einem der Ansprüche 7 oder 8, wobei die Lufteinlassöffnungen (107) runde Öffnungen sind, die gemäß einer Vielzahl paralleler Linien auf der Wand (106) des Zündbereichs (104) verteilt sind, oder parallele längliche Löcher sind, und sich die Schlitze (52) und die Spalte (53) zwischen zwei benachbarten Schlitzen der Hülle (51) gemäß einer Richtung erstrecken, die zu der Richtung der Linien, die von den Öffnungen (107) oder den länglichen Löchern gebildet sind, parallel ist.

10. Verbrennungseinheit nach einem der Ansprüche 7 oder 8, wobei die Lufteinlassöffnungen (107) runde Öffnungen sind, die gemäß einer Vielzahl paralleler Linien auf der Wand (106) des Zündbereichs (104) verteilt sind, oder parallele längliche Löcher sind, und wobei sich die Schlitze (52) und die Spalte (53) zwischen zwei benachbarten Schlitzen (52) der Hülle (51) gemäß einer Richtung erstrecken, die zu der Richtung der Linien, die von den Öffnungen (107) oder den länglichen Löchern gebildet sind, in einem Winkel genau zwischen 0 und 90° geneigt ist.

11. Verbrennungseinheit nach einem der vorangehenden Ansprüche, wobei die Brennkammer (10) vom umgekehrten Typ ist.

12. Verbrennungseinheit nach einem der vorangehenden Ansprüche, wobei jeder Kraftstoffinjektor (100) ferner ausgebildet ist, um die Brennkammer im Nachstartbetrieb der Turbomaschine zu versorgen.

13. Turbomaschine, umfassend eine Verbrennungseinheit nach einem der vorangehenden Ansprüche.

## Claims

1. A turbomachine combustion assembly, comprising a casing (30), a combustion chamber (10) and at least one fuel injector (100) for starting a turbomachine (1), the combustion chamber (10) being delimited by two internal (12) and external (14) walls of revolution extending one in the interior of the other and being connected by an annular chamber bottom wall (16) the external wall (14) of the chamber being attached to an annular external wall (31) of the casing.
the injector being applied to the annular external wall of the casing (31) and comprising a fuel ignition chamber (104) extending in the casing (30) successively through an opening (33) provided in the wall (33) of the casing an opening (13) provided in the external wall (14) of the combustion chamber, leading into the interior thereof, at least one wall (106) of the ignition chamber (104) extending between the wall (31) of the casing and the wall (14) of the combustion chamber being provided with at least one air intake opening (107),
the combustion assembly being **characterized in that** the external wall (14) of the combustion chamber is integral with a device (50) for blocking the or said air intake openings (107) depending on the thermal dilation state of the combustion chamber (10).

2. The combustion assembly according to claim 1, wherein the blocking device (50) is disposed against the wall (106) of the ignition chamber and in a sliding relationship therewith.

3. The combustion assembly according to one of claims 1 or 2, wherein the blocking device (50) is formed to block at least certain air intake openings (107) in a thermal dilation state called "hot" of the combustion chamber (10), corresponding to a post-starting regime of the turbomachine (1).

4. The combustion assembly according to one of claims 1 or 2, wherein the blocking device (50) is formed to block at least certain air intake openings (107) in a thermal dilation state called "cold" of the combustion chamber (10), corresponding to a shut-down regime of the turbomachine (1).

5. The combustion assembly according to one of the preceding claims, wherein the device (50) for blocking the air intake opening(s) (107) is a sheath (51) surrounding the wall (106) of the ignition chamber (104).

6. The combustion assembly according to claim 5, wherein the wall (106) of the ignition chamber (104) is provided with a triangular air intake opening (107), and the sheath is provided with a rectangular window (52) with a width greater than or equal to the base of the triangle and with a height greater than or equal to that of the triangle.

7. The combustion assembly according to claim 5, wherein the wall (106) of the ignition chamber (104) is provided with a plurality of air intake openings (107), the openings being circular or oblong, the sheath (51) being provided with regularly spaced slots (52), the interstice (53) between two adjacent slots (52) having a width greater than or equal to the diameter or to the height of the air intake openings (107).

8. The combustion assembly according to the preceding claim, wherein the width of a slot (53) of the sheath is greater than or equal to the diameter or to the height of the air intake openings (107).

9. The combustion assembly according to one of claims 7 or 8, wherein the air intake openings (107) are circular openings distributed along a plurality of parallel lines on the wall (106) of the ignition chamber (104) or are parallel oblong holes, and the slots (52) and the interstices (53) between two adjacent slots of the sheath (51) extend in a direction parallel to the direction of the lines formed by the openings (107) or the oblong holes.

10. The combustion assembly according to one of claims 7 or 8, wherein the air intake openings (107) are circular openings distributed along a plurality of parallel lines on the wall (106) of the ignition chamber (104) or are parallel oblong holes, and wherein the slots and the interstices (53) between two adjacent slots (52) of the sheath (51) extend in a direction inclined with respect to the direction of the lines formed by the opening (107) or the oblong holes, by an angle strictly comprised between 0 and 90°.

11. The combustion assembly according to one of the preceding claims, wherein the combustion chamber (10) is of the reverse-flow type.

12. The combustion assembly according to one of the preceding claims, wherein each fuel injector (100) is also adapted to feed the combustion chamber during a post-starting regime of the turbomachine.

13. A turbomachine comprising a combustion assembly according to one of the preceding claims.
